# EUROPEAN PATENT APPLICATION

(11) **EP 2 887 706 A1**
(43) Date of publication of application: **24.06.2015**
(21) Application number: 13879442.5
(22) Date of filing: 27.03.2013
(51) Int. Cl.: H04W 4/06

(54) **MOBILE COMMUNICATION SYSTEM, MOBILE COMMUNICATION METHOD, GATEWAY DEVICE, AND WIRELESS BASE STATION**

(30) Priority: 17.08.2012 JP 2012180765
(71) Applicant: NEC Corporation, Tokyo 108-8001 (JP)
(72) Inventor: KOZUKA, Hideki, Tokyo 108-8001 (JP); UEDA, Yoshio, Tokyo 108-8001 (JP)
(74) Representative: MacDougall, Alan John Shaw
(86) International application number: PCT/JP2013/002102
(87) International publication number: WO 2014/027431

(57) **Abstract**

A mobile communication system (100) includes: a plurality of radio base stations (111-11n) each transmitting a setting request including identification information of the radio base station itself and group identification information identifying a group to which the radio base station belongs; a gateway apparatus (120) connected to the plurality of radio base stations (111-11n), the gateway apparatus (120) associating the identification information and the group identification information included in the setting request with each other upon receipt of the setting request and storing as distribution destination information; and a switching center (130) transmitting, to the gateway apparatus (120), a distribution request including the group identification information of a group being a target to distribute an emergency early warning. When the gateway apparatus (120) has received the distribution request, the gateway apparatus (120) specifies at least one radio base station associated with the group identification information included in the distribution request out of the distribution destination information, and transfers the distribution request to the specified radio base station. When the distribution request has been transferred from the gateway apparatus (120), the radio base station distributes the emergency early warning to a subordinate cell.

## Description

### Technical Field

The present invention relates to a mobile communication system, a mobile communication method, a gateway apparatus, and a radio base station. In particular, the present invention relates to a mobile communication system, a mobile communication method, a gateway apparatus, and a radio base station, for distributing emergency early warnings.

### Background Art

A mobile communication system of the LTE (Long Term Evolution) scheme is used for distributing emergency early warnings of the ETWS (Earthquake and Tsunami Warning System) scheme or the like.

Patent Literature 1 discloses a technique relating to a mobile communication method in which a radio base station transmits, in response to an emergency information transmission request from a switching center MME, emergency information to subordinate cells. In particular, in the mobile communication method according to Patent Literature 1, when the radio base station has failed to transmit report information to all the subordinate cells, the radio base station reports the failure to the switching center.

Patent Literature 2 discloses a technique of reporting, to a switching center, any one of identification information pieces of different length of a radio base station in accordance with the operating mode of the radio base station. Further, Patent Literature 2 discloses the case in which a gateway apparatus is present between the switching center MME and the radio base station eNB.

### Citation List

### Patent Literature

Patent Literature 1: Japanese Unexamined Patent Application Publication No. 2010-178322
Patent Literature 2: Japanese Unexamined Patent Application Publication No. 2011-97543

### Summary of Invention

### Technical Problem

Here, when the gateway apparatus described above has received an emergency early warning request, the gateway apparatus transfers the emergency early warning request to all the subordinate radio base stations. Thus, there arises a problem that a process delay occurs. This is because the gateway apparatus lacks any mechanism of specifying the distribution destination radio base station.

For example, in the case where hundreds of thousands of radio base stations are connected to the gateway apparatus, even when the number of radio base stations to which an emergency early warning is essentially to be transferred is about a hundred, the gateway apparatus transfers the emergency early warning request to all the hundreds of thousands of radio base stations. Accordingly, even though most of the radio base stations do not ultimately distribute the emergency early warning to the subordinate cells, the burden of the transferring process to such radio base stations becomes great. Therefore, a delay occurs in transferring the emergency early warning to the radio base stations to which the emergency early warning is essentially to be transferred, which may spoil the intent of the emergency early warning.

The present invention has been made in consideration of the foregoing problem, and an object thereof is to provide a mobile communication system, a mobile communication method, a gateway apparatus, and a radio base station, for the gateway apparatus to properly specify the radio base station to which an emergency early warning is to be transferred.

### Solution to Problem

A first exemplary aspect of the present invention is a mobile communication system including:
a plurality of radio base stations that each transmit a setting request including identification information of the radio base station itself and group identification information identifying a group to which the radio base station belongs;
a gateway apparatus that is connected to the plurality of radio base stations, the gateway apparatus associating, upon receipt of the setting request, the identification information and the group identification information included in the setting request with each other and storing as distribution destination information; and
a switching center that transmits, to the gateway apparatus, a distribution request including group identification information of a group being a target to distribute an emergency early warning, wherein
the gateway apparatus specifies, upon receipt of the distribution request, at least one of the radio base stations that is associated with the group identification information included in the distribution request out of the distribution destination information,
the gateway apparatus transfers the distribution request to the specified radio base station, and
the radio base station distributes, when the distribution request has been transferred from the gateway apparatus, the emergency early warning to a subordinate cell.

A second exemplary aspect of the present invention is a s mobile communication method including:
transmitting, by each of a plurality of radio base stations connected to a gateway apparatus, a setting request including identification information of the radio base station itself and group identification information identifying a group to which the radio base station belongs to the gateway apparatus;
associating, by the gateway apparatus, upon receipt of the setting request, the identification information and the group identification information included in the setting request with each other, and storing as distribution destination information;
transmitting, by a switching center, to the gateway apparatus, a distribution request including group identification information of a group being a target to distribute an emergency early warning;
specifying, by the gateway apparatus, upon receipt of the distribution request, at least one of the radio base stations that is associated with the group identification information included in the distribution request out of the distribution destination information, and transferring the distribution request to the specified radio base station; and
distributing, by the radio base station, the emergency early warning to a subordinate cell when the distribution request has been transferred from the gateway apparatus.

A third exemplary aspect of the present invention is a gateway apparatus that is connected to a plurality of radio base stations, the gateway apparatus including:
receiving means for receiving, from each of the plurality of radio base stations, a setting request including identification information of the radio base station itself and group identification information identifying a group to which the radio base station belongs;
storing means for associating, upon receipt of the setting request, the identification information and the group identification information included in the setting request with each other and storing as distribution destination information; and
transferring means for specifying, upon receipt of the distribution request including the group identification information of a group being a target to distribute an emergency early warning from a switching center, at least one of the radio base stations that is associated with the group identification information included in the distribution request out of the distribution destination information, and transferring the distribution request to the specified radio base station.

A forth exemplary aspect of the present invention is a radio base station that is connected to a gateway apparatus, the radio base station including:
transmitting means for transmitting, to the gateway apparatus, a setting request including identification information of the radio base station itself and group identification information identifying a group to which the radio base station belongs, so as to cause the gateway apparatus to associate the identification information and the group identification information with each other and to store as distribution destination information; and
distributing means for distributing an emergency early warning to a subordinate cell, in response to the gateway apparatus: receiving a distribution request including group identification information of a group being a target to distribute the emergency early warning from a switching center; specifying the identification information of the radio base station itself associated with the group identification information included in the distribution request out of the distribution destination information; and transferring the distribution request.

### Advantageous Effects of Invention

The present invention has been made in consideration of the foregoing problem, and the present invention is capable of providing a mobile communication system, a mobile communication method, a gateway apparatus, and a radio base station, for the gateway apparatus to properly specify the radio base station to which an emergency early warning is to be transferred, thereby preventing any delay in a process of distributing the emergency early warning.

### Brief Description of Drawings

[Fig. 1]

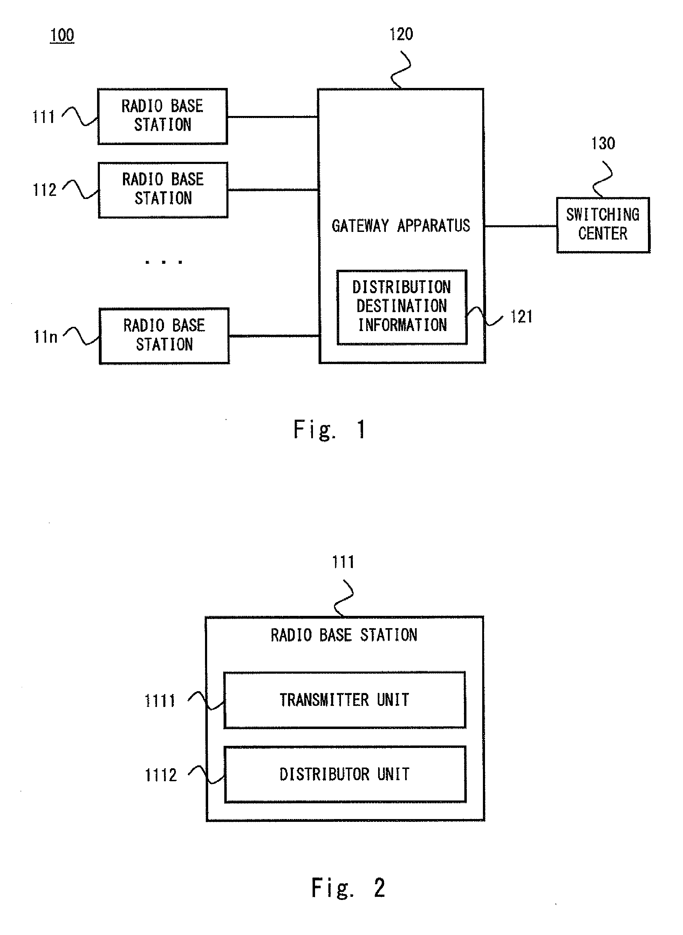

   Fig. 1 is a block diagram showing the structure of a mobile communication system according to a first embodiment of the present invention;
[Fig. 2]
   Fig. 2 is a block diagram showing the structure of the radio base station according to the first embodiment of the present invention;
[Fig. 3]

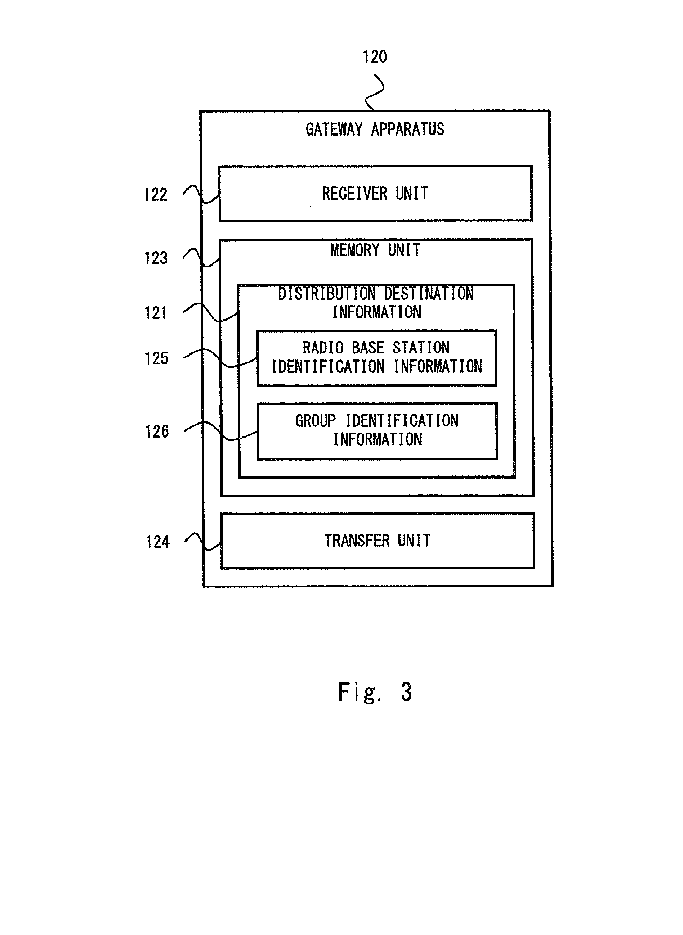

   Fig. 3 is a block diagram showing the structure of the gateway apparatus according to the first embodiment of the present invention;
[Fig. 4]

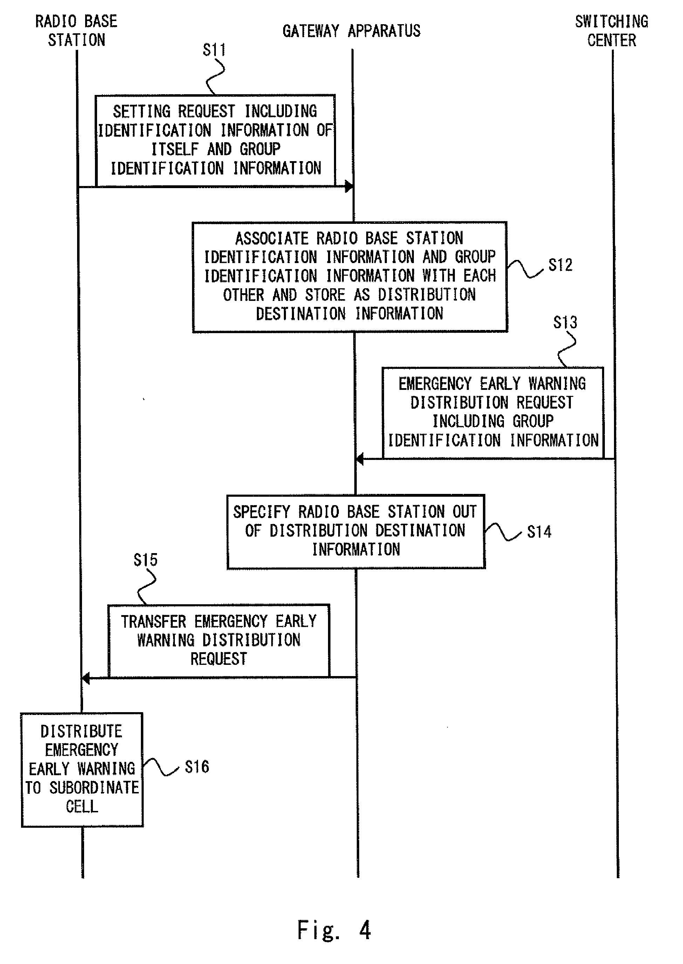

   Fig. 4 is a sequence diagram showing the flow of a mobile communication method according to the first embodiment of the present invention;
[Fig. 5]

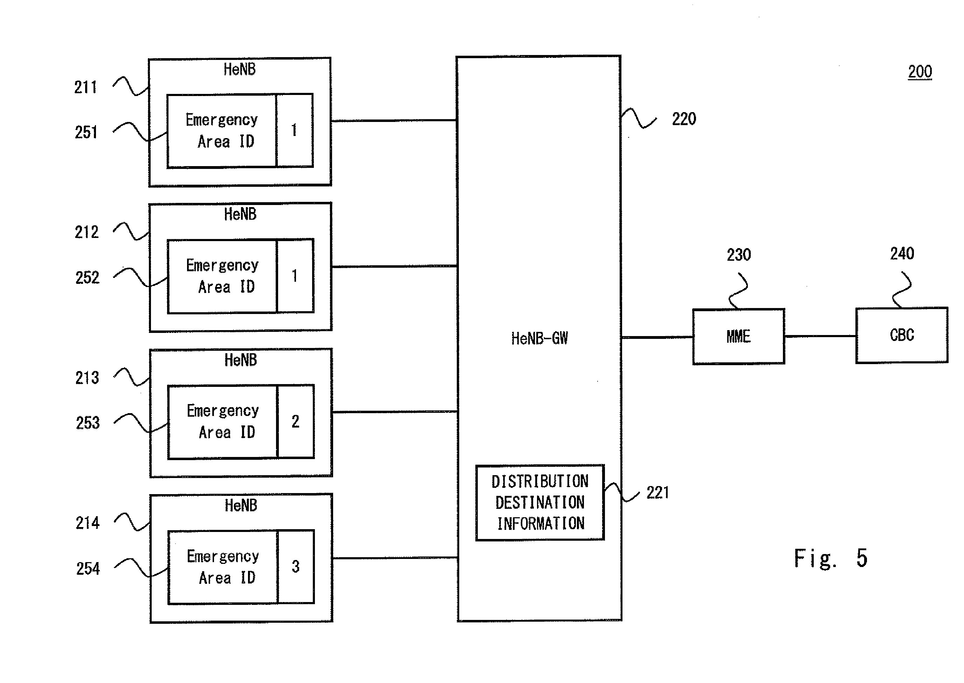

   Fig. 5 is a block diagram showing the structure of a mobile communication system according to a second embodiment of the present invention;
[Fig. 6]

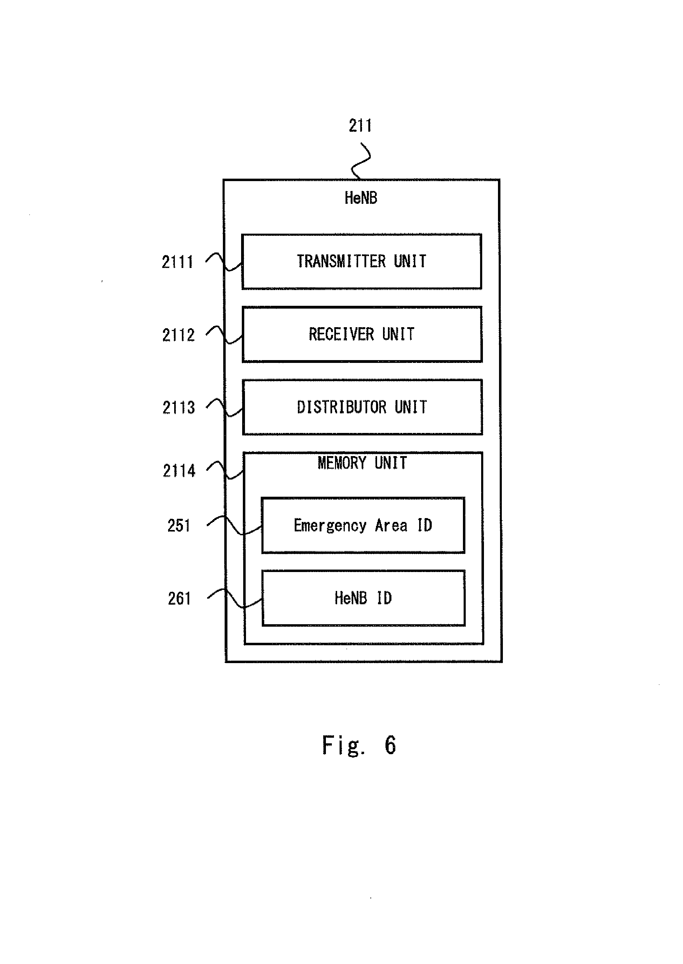

   Fig. 6 is a block diagram showing the structure of the HeNB according to the second embodiment of the present invention;
[Fig. 7]

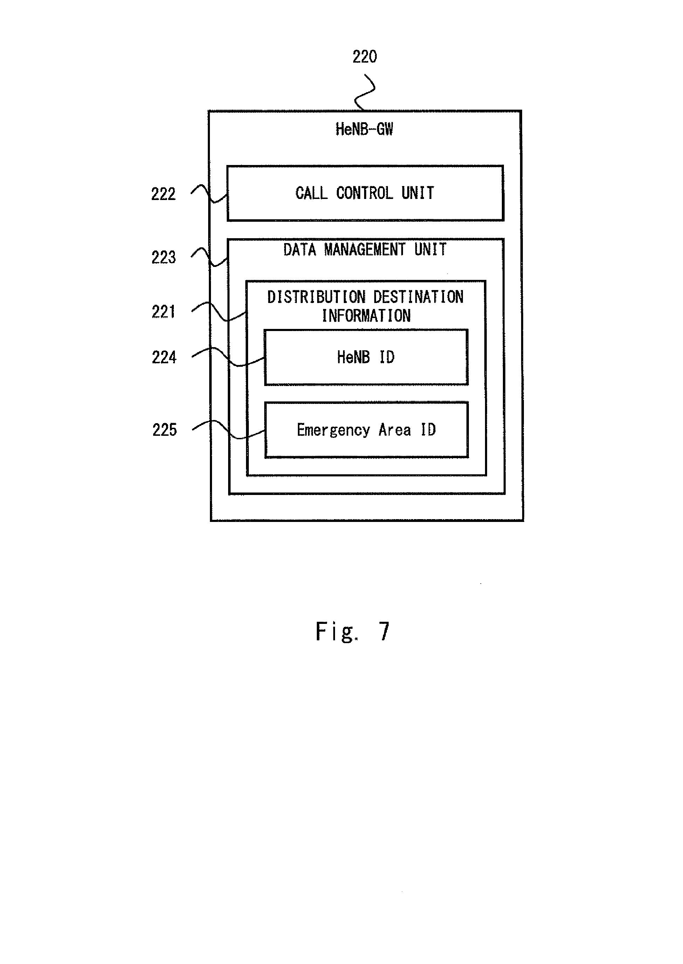

   Fig. 7 is a block diagram showing the structure of the HeNB-GW according to the second embodiment of the present invention;
[Fig. 8]

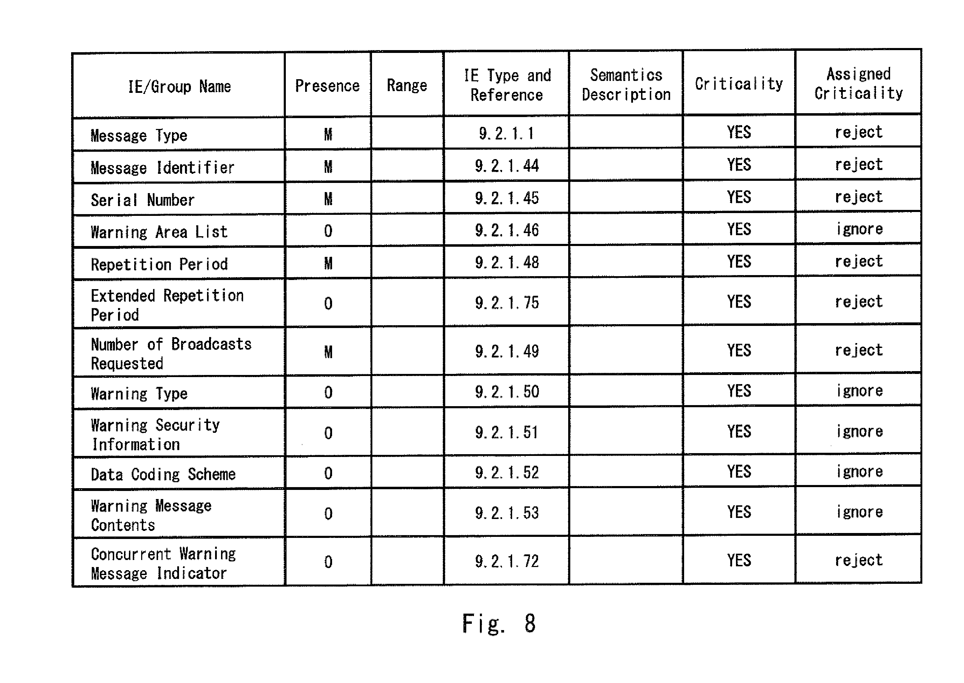

   Fig. 8 is a table for describing parameters of an S1AP WRITE-REPLACE WARNING REQUEST according to a related art;
[Fig. 9]

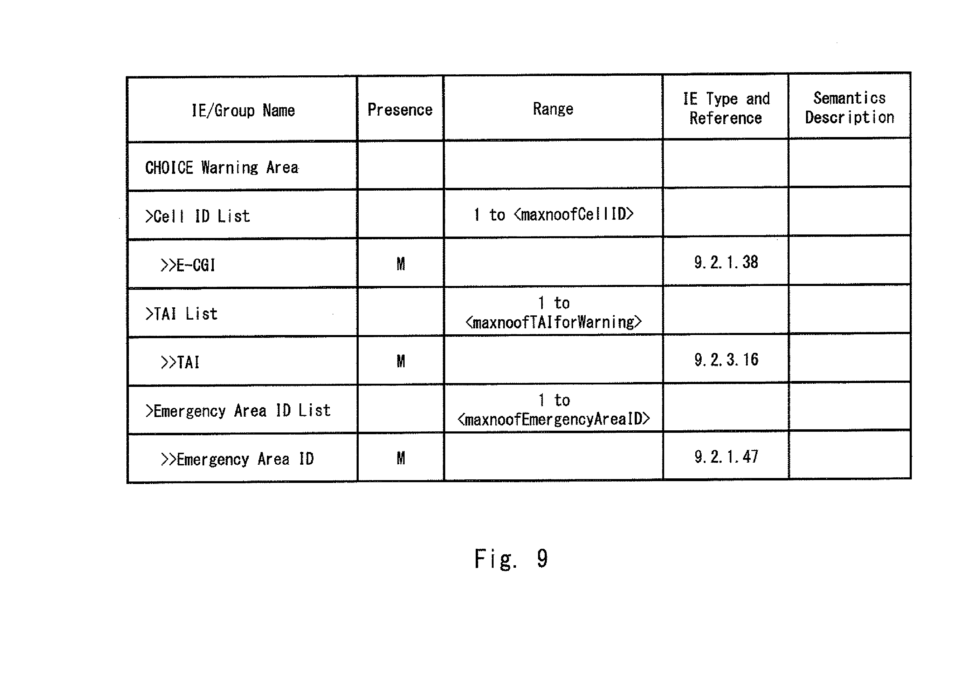

   Fig. 9 is a table for describing a Warning Area List according to the related art;
[Fig. 10]

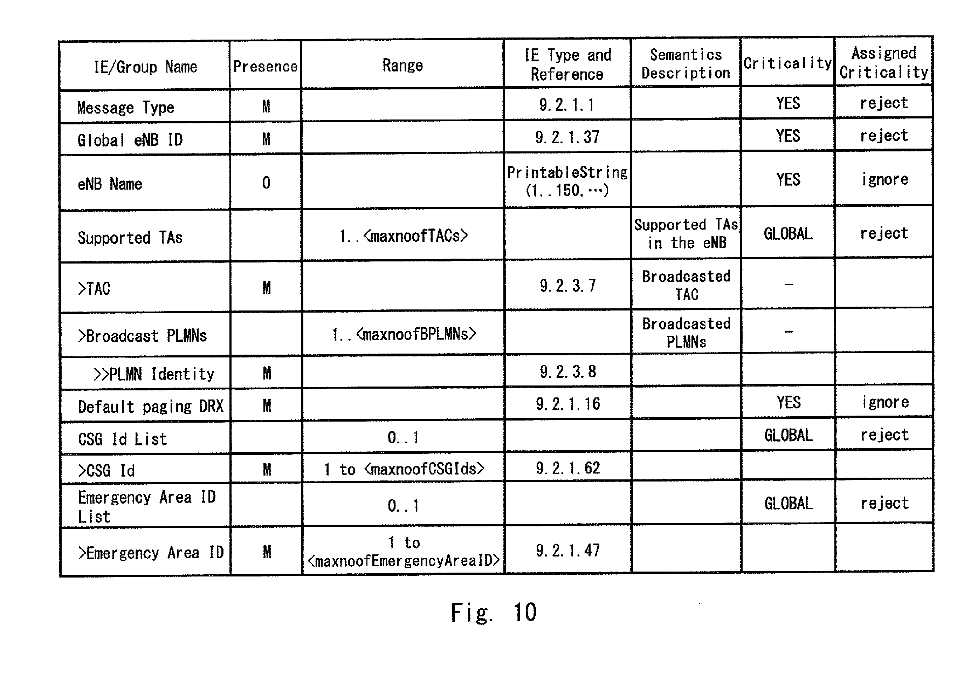

   Fig. 10 is a table showing an example of parameters of the S1AP S1 SETUP REQUEST according to the second embodiment of the present invention;
[Fig. 11]

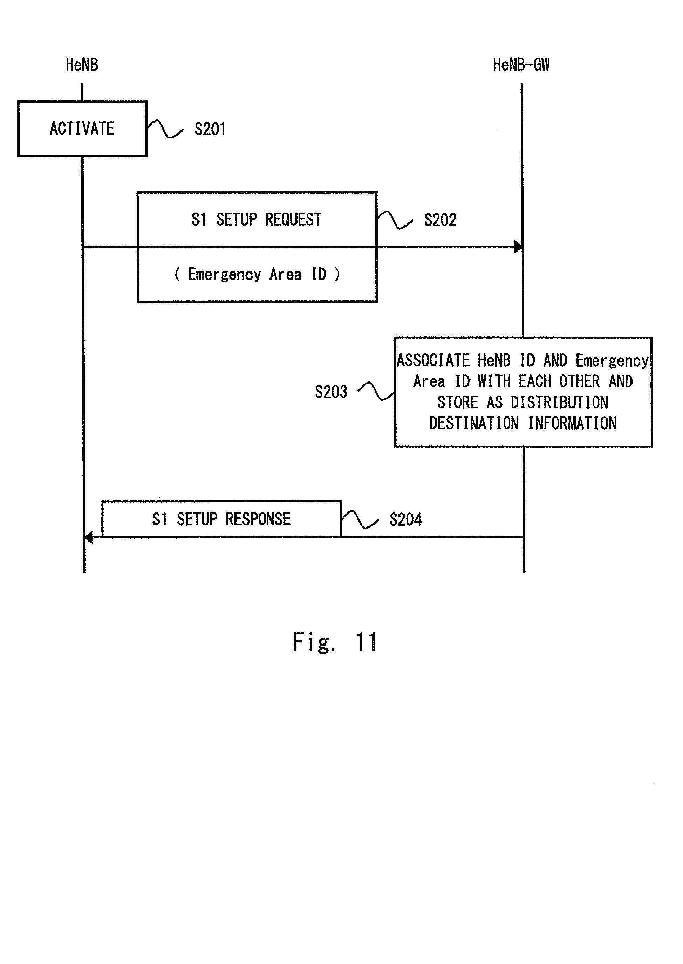

   Fig. 11 is a sequence diagram showing the flow of an Emergency Area ID registration process by the S1 SETUP REQUEST according to the second embodiment of the present invention;
[Fig. 12]

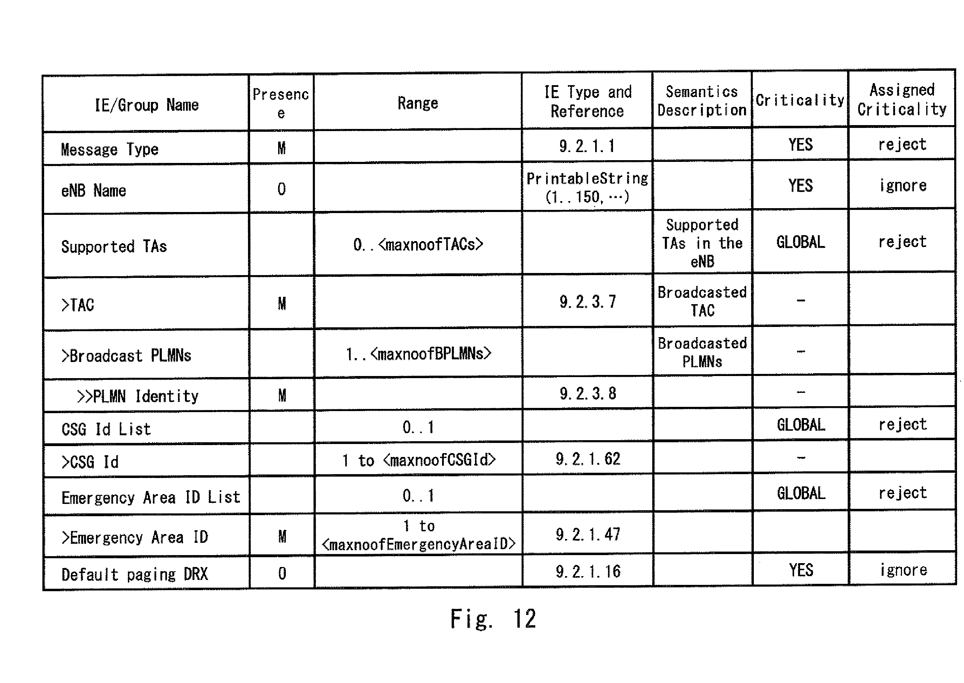

   Fig. 12 is a table showing an example of parameters of the S1AP ENB CONFIGURATION UPDATE according to the second embodiment of the present invention;
[Fig. 13]

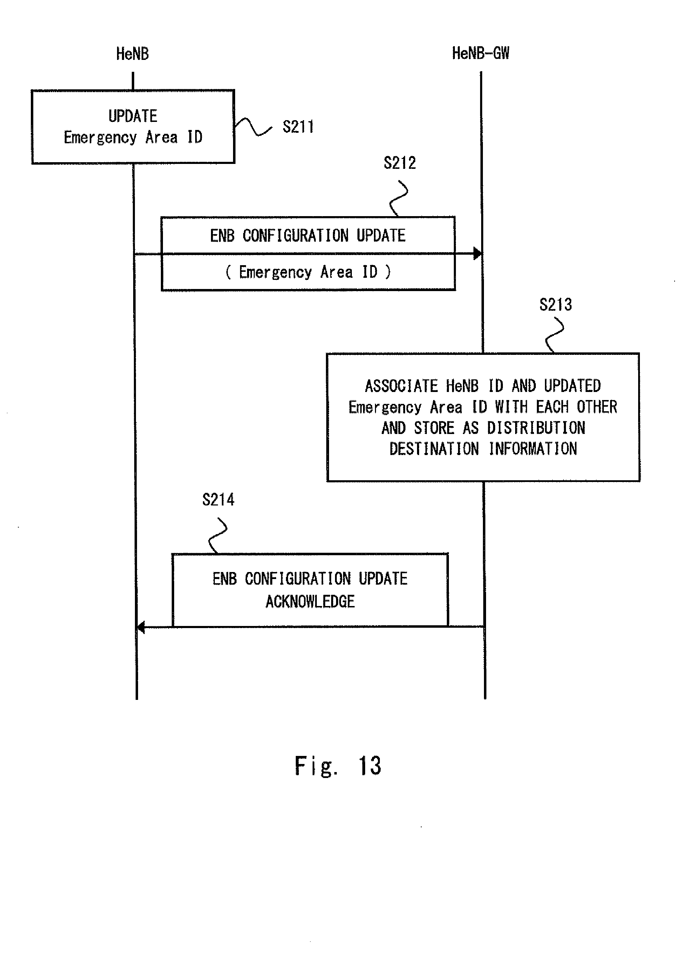

   Fig. 13 is a sequence diagram showing the flow of an Emergency Area ID registration process by the ENB CONFIGURATION UPDATE according to the second embodiment of the present invention;
[Fig. 14]

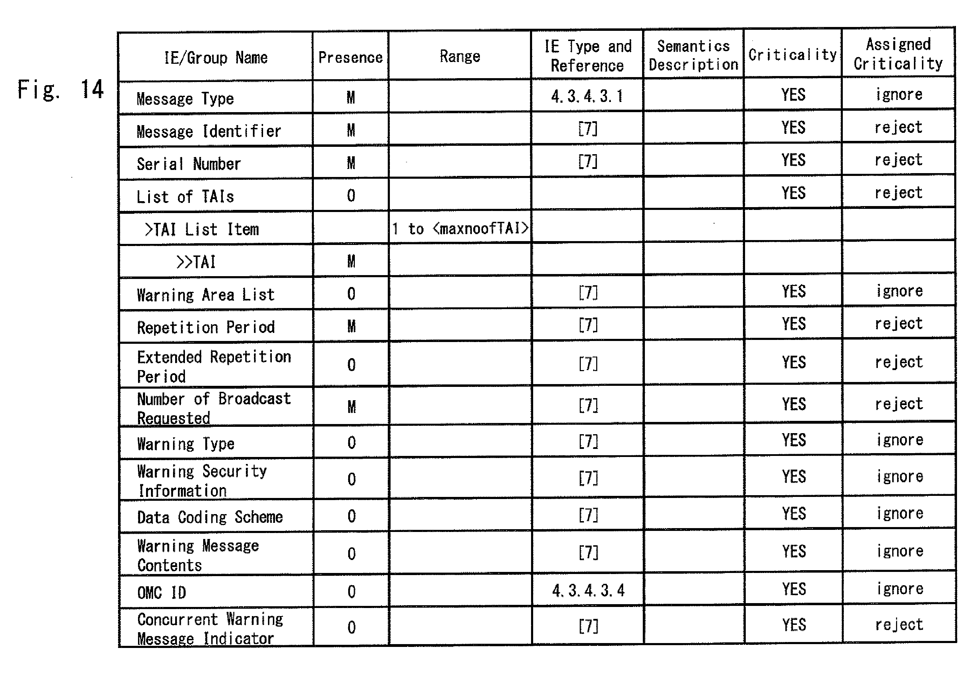

   Fig. 14 is a table for describing parameters of a SBc-AP WRITE-REPLACE WARNING REQUEST according to the related art;
[Fig. 15]

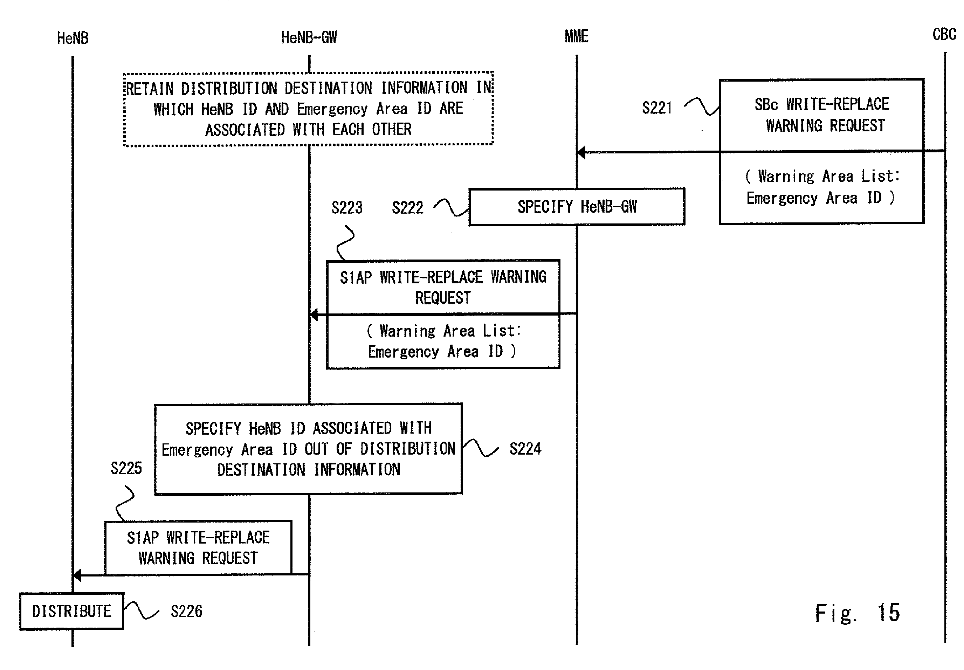

   Fig. 15 is a sequence diagram showing the flow of emergency early warning distribution by the WRITE-REPLACE WARNING REQUEST according to the second embodiment of the present invention;
[Fig. 16]

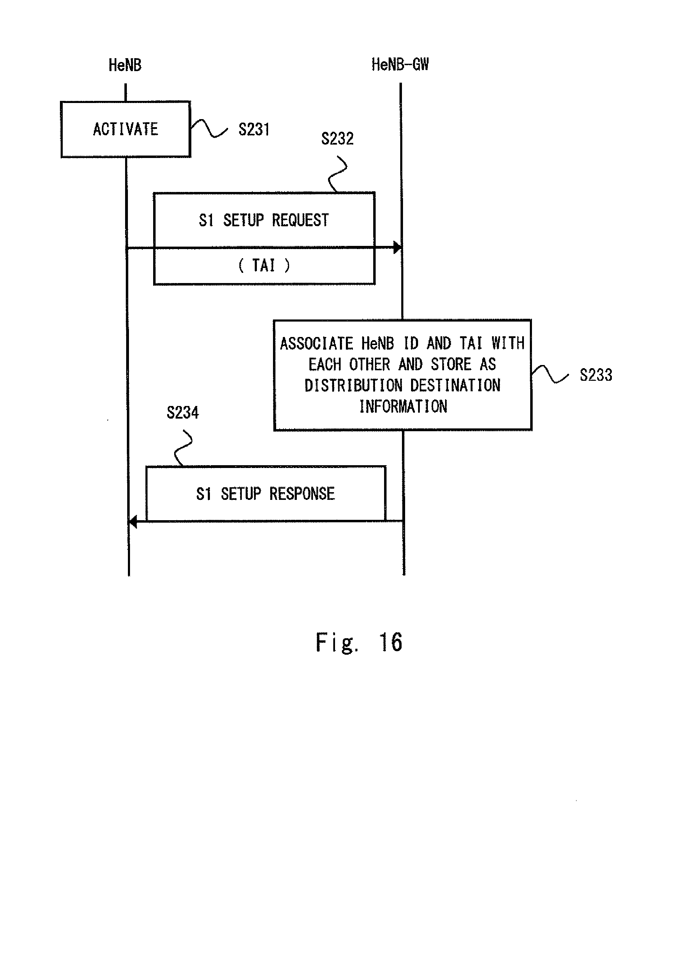

   Fig. 16 is a sequence diagram showing the flow of a Tracking Area ID registration process by the S1 SETUP REQUEST according to the third embodiment of the present invention;
[Fig. 17]

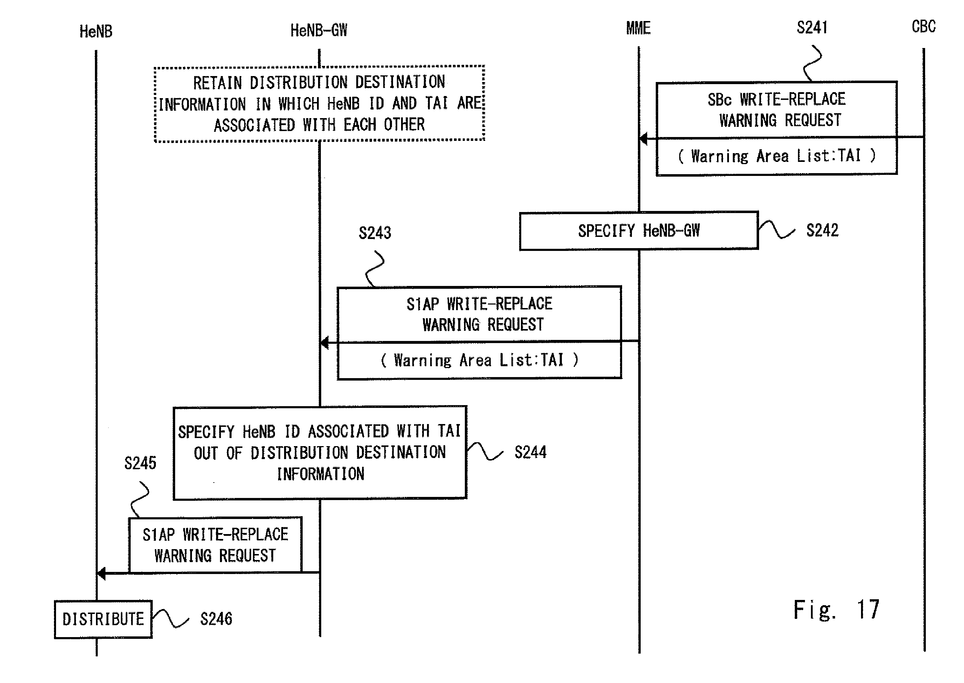

   Fig. 17 is a sequence diagram showing the flow of emergency early warning distribution by the WRITE-REPLACE WARNING REQUEST according to the third embodiment of the present invention;
[Fig. 18]

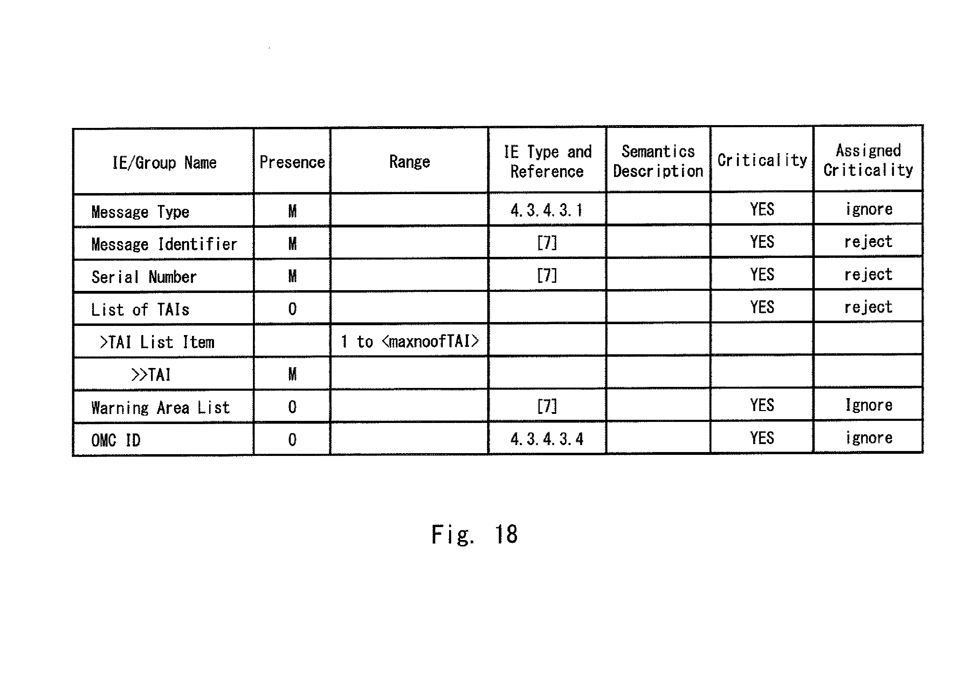

   Fig. 18 is a table for describing parameters of a SBc-AP STOP WARNING REQUEST according to the related art;
[Fig. 19]

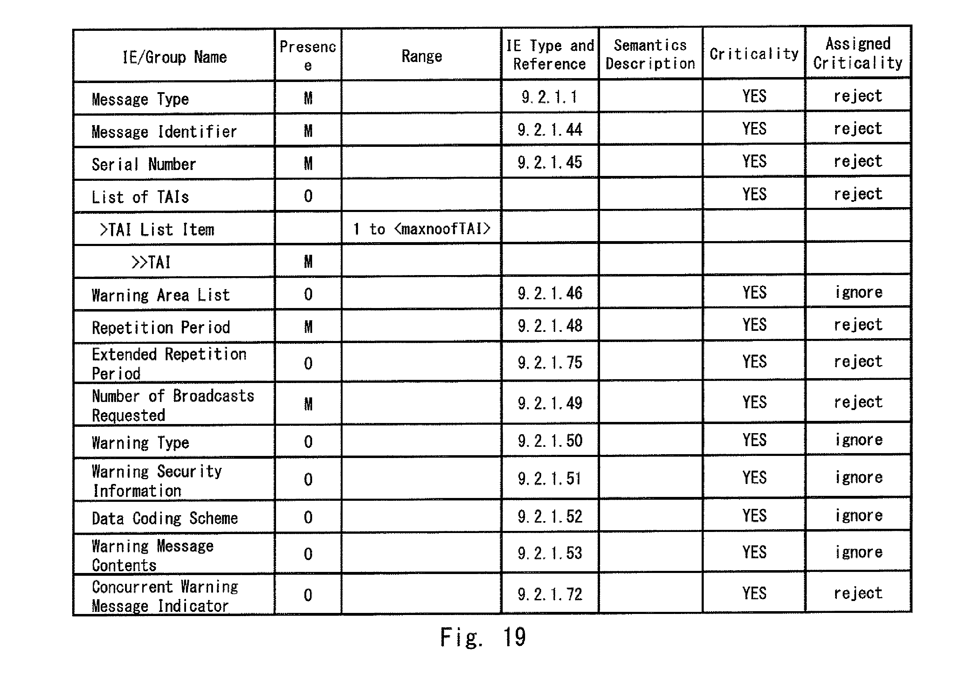

   Fig. 19 is a table showing an example of parameters of the S1AP WRITE-REPLACE WARNING REQUEST according to the fourth embodiment of the present invention; and
[Fig. 20]

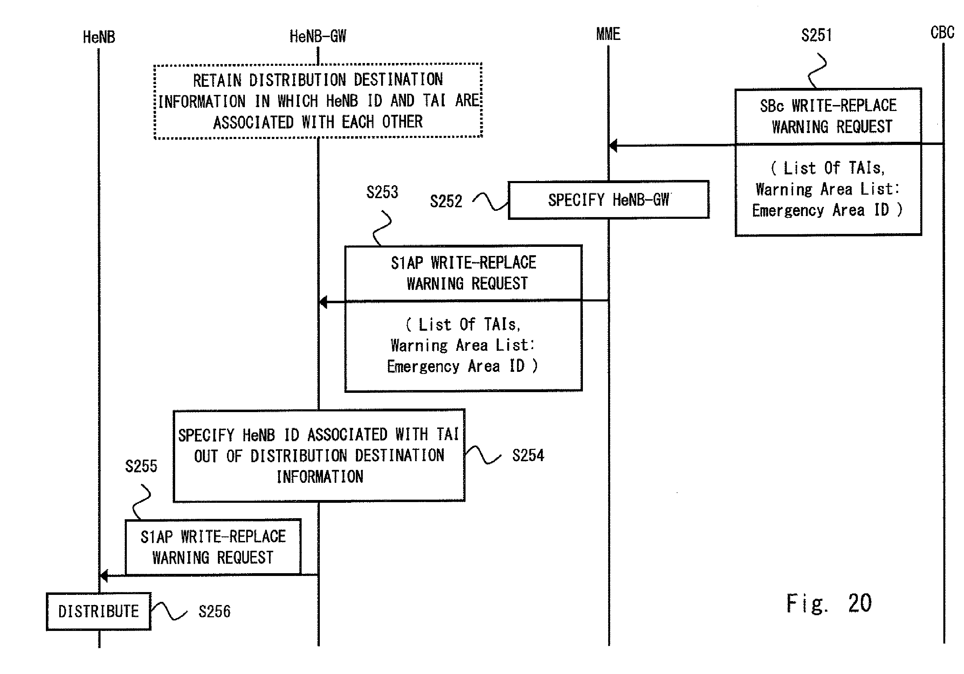

   Fig. 20 is a sequence diagram showing the flow of emergency early warning distribution by the WRITE-REPLACE WARNING REQUEST according to the fourth embodiment of the present invention.

### Description of Embodiments

In the following, specific embodiments to which the present invention is applied will be described in detail with reference to the drawings. Throughout the drawings, identical elements are denoted by identical reference signs, and repetitive descriptions will be omitted as necessary for the sake of clarity.

### <First Embodiment of Invention>

Fig. 1 is a block diagram showing the structure of a mobile communication system 100 according to a first embodiment of the present invention. The mobile communication system 100 includes radio base stations 111, 112, ··· and 11n (n being a natural number equal to or greater than 2), a gateway apparatus 120, and a switching center 130. It is assumed that the mobile communication system 100 is capable of distributing emergency early warnings about a natural disaster or the like to prescribed mobile stations (not shown).

Each of the radio base stations 111 to 11n is connected to the gateway apparatus 120. Fig. 2 is a block diagram showing the structure of the radio base station 111 according to the first embodiment of the present invention. Note that, since the radio base stations 112 to 11n are structured similarly to the radio base station 111, illustration and description thereof are omitted.

The radio base station 111 includes a transmitter unit 1111 and a distributor unit 1112. The transmitter unit 1111 transmits, to the gateway apparatus 120, a setting request which includes identification information of the radio base station 111 itself and group identification information identifying the group to which the radio base station 111 belongs. The distributor unit 1112 distributes, when an emergency early warning distribution request has been transferred from the gateway apparatus 120, an emergency early warning to subordinate cells.

A description is given referring back to Fig. 1. The gateway apparatus 120 is connected to the n-pieces of radio base stations 111 to 11n and to the switching center 130. Fig. 3 is a block diagram showing the structure of the gateway apparatus 120 according to the first embodiment of the present invention. The gateway apparatus 120 includes a receiver unit 122, a memory unit 123, and a transfer unit 124.

The receiver unit 122 receives the setting request from each of the radio base stations 111 to 11n. When the receiver unit 122 has received a setting request, the memory unit 123 associates identification information and group identification information included in the setting request with each other, and stores the same as distribution destination information 121. When the transfer unit 124 has received an emergency early warning distribution request from the switching center 130, which will be described later, the transfer unit 124 specifies at least one radio base station associated with the group identification information included in the distribution request out of the distribution destination information 121, and transfers the distribution request to the specified radio base station.

Referring back to Fig. 1, the switching center 130 transmits, to the gateway apparatus 120, the distribution request including the group identification information of a group being assigned to distribute an emergency early warning.

Fig. 4 is a sequence diagram showing the flow of a mobile communication method according to the first embodiment of the present invention. Firstly, each of the radio base stations 111 to 11n transmits, to the gateway apparatus 120, a setting request including the identification information of itself and group identification information (S11). Next, when the gateway apparatus 120 has received the setting request, the gateway apparatus 120 associates the identification information of the radio base station and the group identification information included in the setting request with each other, and stores the same as distribution destination information (S12).

Thereafter, the switching center 130 transmits, to the gateway apparatus 120, an emergency early warning distribution request including the group identification information of a group being assigned to distribute an emergency early warning (S13). When the gateway apparatus 120 has received the distribution request, the gateway apparatus 120 specifies at least one radio base station associated with the group identification information included in the distribution request, out of the distribution destination information 121 (S14). Then, the gateway apparatus 120 transfers, to the specified radio base station, the emergency early warning distribution request (S15).

Thereafter, the radio base station to which the distribution request has been transferred distributes the emergency early warning to the subordinate cells (S16).

In this manner, the mobile communication system 100 according to the first embodiment of the present invention previously stores, in the gateway apparatus 120, the identification information of each radio base station and the group identification information that may be included in an emergency early warning distribution request in association with each other. Accordingly, when the gateway apparatus 120 has received an emergency early warning distribution request, the gateway apparatus 120 can properly specify the radio base station being assigned to distribute, based on the group identification information included in the distribution request. In other words, the gateway apparatus 120 can narrow the distribution-assigned radio base stations to the minimum required number.

Hence, the gateway apparatus 120 can transfer the distribution request only to the radio base station to which the distribution request should be essentially transferred. That is, a distribution request is not transferred to a radio base station that does not ultimately required to distribute. Thus, a delay in the process of distributing the emergency early warning can be prevented.

### <Second Embodiment of Invention>

Fig. 5 is a block diagram showing the structure of a mobile communication system 200 according to a second embodiment of the present invention. The mobile communication system 200 is one example of the mobile communication system 100 according to the first embodiment described above. Further, it is assumed that the mobile communication system 200 is of the LTE (Long Term Evolution) scheme. However, the communication scheme is not limited thereto. Still further, in the second embodiment, it is assumed that distribution area information that identify the area in which emergency early warnings are distributed is used as the group identification information. Accordingly, in the following, a description will be given of an example where an Emergency Area ID is used as the distribution area information. Note that, the distribution area information is not limited thereto.

The mobile communication system 200 includes HeNBs (Home eNodeBs) 211 to 214, a HeNB-GW (Home eNodeB GateWay) 220, an MME (Mobile Management Entity) 230, and a CBC (Cell Broadcast Center) 240.

The HeNBs 211 to 214 are one example of the radio base stations 111 to 11n described above, and they should be two or more in number. That is, the HeNBs 211 to 214 are connected to the HeNB-GW 220. Further, here, the HeNB 211 and the HeNB 212 retains therein Emergency Area IDs 251 and 252 indicative of "1". Still further, the HeNB 213 retains therein an Emergency Area ID 253 indicative of "2". Still further, the HeNB 214 retains therein an Emergency Area ID 254 indicative of "3".

Fig. 6 is a block diagram showing the structure of the HeNB 211 according to the second embodiment of the present invention. Note that, since the HeNBs 212 to 214 are structured similarly to the HeNB 211, illustration and description thereof are omitted.

The HeNB 211 includes a transmitter unit 2111, a receiver unit 2112, a distributor unit 2113, and a memory unit 2114. The memory unit 2114 is a memory device that stores the Emergency Area ID 251 and a HeNB ID 261. Here, the HeNB ID 261 is the identification information of the HeNB 211. As the HeNB ID 261, the Global eNB ID or the like can be used, for example.

The transmitter unit 2111 reads the Emergency Area ID 251 and the HeNB ID 261 from the memory unit 2114, and includes them in a setting request and transmits the same to the HeNB-GW 220. The receiver unit 2112 receives an emergency early warning distribution request transferred from the HeNB-GW 220. The distributor unit 2113 distributes the emergency early warning to subordinate cells.

The description is given referring back to Fig. 5. The HeNB-GW 220 is one example of the gateway apparatus 120 described above. The HeNB-GW 220 is connected to the HeNBs 211 to 214 and to the MME 230. Further, the HeNB-GW 220 stores therein distribution destination information 221.

Fig. 7 is a block diagram showing the structure of the HeNB-GW 220 according to the second embodiment of the present invention. The HeNB-GW 220 includes a call control unit 222 and a data management unit 223. Here, the call control unit 222 includes the function of the receiver unit 122 and the transfer unit 124 described above. Further, the data management unit 223 includes the function of the memory unit 123 described above.

The call control unit 222 receives, from each of the HeNBs 211 to 214, a setting request including the HeNB ID of each HeNB and the Emergency Area ID of each HeNB. Further, when the call control unit 222 has received a setting request, the data management unit 223 associates a HeNB ID 225 and an Emergency Area ID 224 included in the setting request with each other, and stores the same as the distribution destination information 221.

Further, when the group identification information included in the distribution request having received from the MME 230 is the Emergency Area ID, the call control unit 222 specifies, out of the distribution destination information 221, at least one HeNB ID 225 associated with the Emergency Area ID 224 included in the distribution request, and transfers the distribution request to the HeNB corresponding to the specified HeNB ID 225.

The description is given referring back to Fig. 5. The MME 230 is one example of the switching center 130 described above. Further, the CBC 240 is a message distribution station that transmits an emergency early warning distribution request to the MME 230. It is assumed that the MME 230 and the CBC 240 are capable of including, as the distribution target to be included in a distribution request, the Emergency Area ID or the like. Note that, since other structure of the MME 230 and the CBC 240 can be realized by known elements, illustration and description thereof are omitted.

Here, a description will be given of a problem that may arise with the existing LTE wireless communication system. Fig. 8 is a table for describing parameters of an S1AP WRITE-REPLACE WARNING REQUEST in the LTE. A Warning Area List in Fig. 8 is one example of the area with which the above-described group identification information of a group being target to distribute an emergency early warning is designated. Fig. 9 is a breakdown of the Warning Area List. As shown in Fig. 9, to the Warning Area List, only one of a Cell ID, a Tracking Area ID (hereinafter referred to as the "TAI"), and the Emergency Area ID can be set.

Accordingly, in the case where the S1AP WRITE-REPLACE WARNING REQUEST is used for distributing an emergency early warning in the existing LTE wireless communication system, the Emergency Area ID may be set to the Warning Area List. In this case, the HeGW having received the S1AP WRITE-REPLACE WARNING REQUEST cannot specify the HeNB being the distribution destination, and transfers the distribution request to every subordinate HeNB. Accordingly, consequently the transfer process is carried out also on the HeNB not being assigned to distribute, whereby the process may possibly delay.

Accordingly, the mobile communication system 200 according to the second embodiment of the present invention uses the Emergency Area ID as the group identification information. Firstly, the HeNBs 211 to 214 being the radio base stations include, in a setting request to the HeNB-GW 220 being the gateway apparatus, a HeNB ID being the identification information of each radio base station and an Emergency Area ID as the group identification information.

Here, the setting request may be at least one of a request for the radio base station to set a connection with the gateway apparatus, and a request for updating distribution destination information. Alternatively, the setting request may be realized with both of such setting requests.

Then, firstly, a description will be given of the case where the setting request is a request for the radio base station to set a connection with the gateway apparatus. An example of such a setting request may be the S1AP S1 SETUP REQUEST defined in 36.413 V10.3.0 of the 3GPP.

Fig. 10 is a table showing an example of parameters of the S1AP S1 SETUP REQUEST according to the second embodiment of the present invention. Fig. 10 shows that the Emergency Area ID is added to the bottom row.

Fig. 11 is a sequence diagram showing the flow of an Emergency Area ID registration process by the S1 SETUP REQUEST according to the second embodiment of the present invention. Note that, though the process of the HeNB 211 is representatively described in the following, the same holds true for the HeNBs 212 to 214.

Firstly, the HeNB 211 is activated (S201). Then, the transmitter unit 2111 of the HeNB 211 transmits an S1 SETUP REQUEST to the HeNB-GW 220 (S202). At this time, the transmitter unit 2111 transmits the S1 SETUP REQUEST including the Emergency Area ID 251 and the HeNB ID 261.

Subsequently, the call control unit 222 of the HeNB-GW 220 extracts the HeNB ID and the Emergency Area ID from the S1 SETUP REQUEST received from the HeNB 211. Then, the call control unit 222 associates the HeNB ID and the Emergency Area ID with each other and stores the same as the distribution destination information 221 in the data management unit 223 (S203). Thereafter, the call control unit 222 transmits an S1 SETUP RESPONSE to the HeNB 211 (S204).

Next, a description will be given of the case where the setting request is a request for updating the distribution destination information. An example of such a setting request may be the S1AP ENB CONFIGURATION UPDATE defined in 36.413 V10.3.0 of the 3GPP.

Fig. 12 is a table showing an example of parameters of the S1AP ENB CONFIGURATION UPDATE according to the second embodiment of the present invention. Fig. 12 shows that the Emergency Area ID is added to the lower row.

Fig. 13 is a sequence diagram showing the flow of an Emergency Area ID registration process by the ENB CONFIGURATION UPDATE according to the second embodiment of the present invention.

Firstly, the HeNB 211 updates the Emergency Area ID (S211). That is, the HeNB 211 updates the Emergency Area ID 251 in the memory unit 2114 to other value.

Then, the transmitter unit 2111 of the HeNB 211 transmits an ENB CONFIGURATION UPDATE to the HeNB-GW 220 (S212). At this time, the transmitter unit 2111 transmits the ENB CONFIGURATION UPDATE including the updated Emergency Area ID 251 and the HeNB ID 261.

Subsequently, the call control unit 222 of the HeNB-GW 220 extracts the HeNB ID and the updated Emergency Area ID from the ENB CONFIGURATION UPDATE received from the HeNB 211. Then, the call control unit 222 associates the HeNB ID and the updated Emergency Area ID with each other, and stores the same as the distribution destination information 221 in the data management unit 223 (S213). Thereafter, the call control unit 222 transmits an ENB CONFIGURATION UPDATE ACKNOWLEDGE to the HeNB 211 (S214).

In this manner, according to the second embodiment, in a setting request from the HeNB 211 or the like being the radio base station to the HeNB-GW 220 being the gateway apparatus, the HeNB ID being the identification information of the radio base station and the Emergency Area ID as the group identification information are included. Then, the HeNB-GW 220 associates the HeNB ID 225 and the Emergency Area ID 224 with each other, and stores the same as the distribution destination information 221 in the data management unit 223. Thus, from then on, when a WRITE-REPLACE WARNING REQUEST is issued as an emergency early warning distribution request from the CBC 240 and the MME 230, if the Emergency Area ID is set to the Warning Area List, the HeNB-GW 220 can properly specify the HeNB being assigned to distribute by the set Emergency Area ID.

Subsequently, a description will be given of an emergency early warning distribution request from the CBC 240. Fig. 14 is a table for describing parameters of a SBc-AP WRITE-REPLACE WARNING REQUEST in the LTE. As shown in Fig. 14, the Warning Area List is included as a parameter, as in Fig. 9.

Fig. 15 is a sequence diagram showing the flow of emergency early warning distribution by the WRITE-REPLACE WARNING REQUEST according to the second embodiment of the present invention. Note that, it is assumed that, following the process shown in Fig. 11 or 13, the HeNB-GW 220 already retains the distribution destination information in which the HeNB IDs and the Emergency Area IDs are associated with each other.

Firstly, the CBC 240 transmits an SBc WRITE-REPLACE WARNING REQUEST to the MME 230 (S221). At this time, the CBC 240 sets "1" as the Emergency Area ID to the Warning Area List, and includes the same in the SBc WRITE-REPLACE WARNING REQUEST. Note that, the operation of the CBC 240 is as defined in TS29.168 V10.0.0 of the 3GPP.

Next, the MME 230 specifies the destination HeNB-GW 220 based on the SBc WRITE-REPLACE WARNING REQUEST received from the CBC 240 (S222). Then, the MME 230 transmits an S1AP WRITE-REPLACE WARNING REQUEST to the specified HeNB-GW 220 (S223). At this time, the Emergency Area ID indicative of "1" is set to the Warning Area List of the S1AP WRITE-REPLACE WARNING REQUEST.

Subsequently, the call control unit 222 of the HeNB-GW 220 extracts the Emergency Area ID from the Warning Area List of the received S1AP WRITE-REPLACE WARNING REQUEST. Then, the call control unit 222 specifies the HeNB ID associated with the Emergency Area ID out of the distribution destination information 221 in the data management unit 223 (S224). Here, since the Emergency Area ID is "1", the HeNBs 211 and 212 are specified in Fig. 5.

Thereafter, the HeNB-GW 220 transmits the S1AP WRITE-REPLACE WARNING REQUEST only to the HeNBs 211 and 212 (S225). Then, the HeNBs 211 and 212 distribute an emergency early warning to their respective subordinate cells, based on the received S1AP WRITE-REPLACE WARNING REQUEST (S226).

As described above, according to the second embodiment, the HeNB-GW 220 previously registers the combinations of the HeNB IDs and the Emergency Area IDs from the HeNBs 211 to 214. Accordingly, when the Emergency Area ID is set to the Warning Area List, a proper HeNB can be specified based on the Emergency Area ID. That is, the transfer destination of the S1AP WRITE-REPLACE WARNING REQUEST can be narrowed to a specified part of the plurality of HeNBs subordinate to the HeNB-GW 220. Hence, transfer to excessive HeNBs can be prevented. That is, it becomes possible to suppress transmission of unnecessary messages, and to prevent a delay in an emergency early warning distribution process.

In other words, according to the second embodiment, since the transmission destination of the S1AP WRITE-REPLACE WARNING REQUEST message is limited based on the Emergency Area ID reported from the HeNB, transmission of unnecessary messages can be prevented and effective use of the network can be achieved.

Further, according to the second embodiment, by narrowing the transmission destinations of a message, the processing time required at the HeNB-GW becomes also short, and hence quick reporting of an ETWS message to the HeNB is achieved. Accordingly, an emergency early warning can be more quickly reported to the users.

### <Third Embodiment of Invention>

As shown in Fig. 9, in the case where the S1AP WRITE-REPLACE WARNING REQUEST is used for distributing an emergency early warning in the existing LTE wireless communication system, in some cases, the TAI (Tracking Area ID) is set to the Warning Area List.

Accordingly, in a third embodiment of the present invention, it is assumed that, as the group identification information, the identification information of a location registration area to which a radio base station itself belongs is used. In the following, a description will be given of the case where the TAI is used as the location registration area. Note that the location registration area is not limited thereto.

The radio base station according to the third embodiment includes the identification information of a location registration area to which the radio base station itself belongs as the group identification information in a setting request, and transmits the same to the gateway apparatus. The gateway apparatus according to the third embodiment specifies, when the group identification information included in a distribution request is the location registration area identification information, at least one radio base station associated with the location registration area identification information included in the distribution request out of the distribution destination information. Note that, since the structure of the mobile communication system according to the third embodiment of the present invention is similar to that shown in Fig. 5, illustration and description thereof are omitted.

Fig. 16 is a sequence diagram showing the flow of a Tracking Area ID registration process by the S1 SETUP REQUEST according to the third embodiment of the present invention. Firstly, the HeNB 211 is activated (S231). Then, the transmitter unit 2111 of the HeNB 211 transmits an S1 SETUP REQUEST to the HeNB-GW 220 (S232). Here, the transmitter unit 2111 transmits the S1 SETUP REQUEST including the TAI and the HeNB ID 261.

Subsequently, the call control unit 222 of the HeNB-GW 220 extracts the HeNB ID and the TAI from the S1 SETUP REQUEST received from the HeNB 211. Then, the call control unit 222 associates the HeNB ID and the TAI with each other, and stores the same as the distribution destination information 221 in the data management unit 223 (S233). Thereafter, the call control unit 222 transmits an S1 SETUP RESPONSE to the HeNB 211 (S234).

Note that, since the same holds true for the case where the setting request is an ENB CONFIGURATION UPDATE, a specific description thereof is omitted.

Fig. 17 is a sequence diagram showing the flow of emergency early warning distribution by the WRITE-REPLACE WARNING REQUEST according to the third embodiment of the present invention. Here, it is assumed that the HeNB 211 in Fig. 5 belongs to a TAI "X"; the HeNBs 212 and 213 belong to a TAI "Y"; and the HeNB 214 belongs to a TAI "Z". Note that, it is assumed that, following the process shown in Fig. 16, the HeNB-GW 220 already retains the distribution destination information in which the HeNB IDs and the TAIs are associated with each other.

Firstly, the CBC 240 transmits an SBc WRITE-REPLACE WARNING REQUEST to the MME 230 (S241). At this time, the CBC 240 sets the TAI "Y" to the Warning Area List and includes the same in the SBc WRITE-REPLACE WARNING REQUEST. Note that the operation of the CBC 240 is as defined in TS29.168 V10.0.0 of the 3GPP.

Next, the MME 230 specifies the destination HeNB-GW 220 based on the SBc WRITE-REPLACE WARNING REQUEST received from the CBC 240 (S242). Then, the MME 230 transmits an S1AP WRITE-REPLACE WARNING REQUEST to the specified HeNB-GW 220 (S243). At this time, the TAI "Y" is set to the Warning Area List of the S1AP WRITE-REPLACE WARNING REQUEST.

Subsequently, the call control unit 222 of the HeNB-GW 220 extracts the TAI from the Warning Area List of the received S1AP WRITE-REPLACE WARNING REQUEST. Then, the call control unit 222 specifies the HeNB ID associated with the TAI out of the distribution destination information 221 in the data management unit 223 (S244). Here, because of the TAI "Y", the HeNBs 212 and 213 are specified in Fig. 5.

Thereafter, the HeNB-GW 220 transmits the S1AP WRITE-REPLACE WARNING REQUEST only to the HeNBs 212 and 213 (S245). Then, the HeNBs 212 and 213 distribute an emergency early warning to their respective subordinate cells based on the received S1AP WRITE-REPLACE WARNING REQUEST (S246).

As described above, according to the third embodiment, the effect similar to that achieved according to the second embodiment can be achieved by using the TAI as the group identification information.

### <Fourth Embodiment of Invention>

As shown in Fig. 14 described above, the SBc-AP WRITE-REPLACE WARNING REQUEST is reported from the CBC 240 to the MME 230. This includes therein a List of TAIs. The same holds true for a SBc-AP STOP WARNING REQUEST (Fig. 18). Accordingly, the MME 230 specifies the distribution-assigned eNB using the List of TAIs. This is explicit from the description "The Tracking Area ID list is only used by the MME. The MME uses it for selecting which eNodeBs to forward the Write-Replace Warning Request message to." in TS23.401 V10.3.0 of the 3GPP.

Here, to the Warning Area List appearing in Figs. 14 and 18, only one of the Cell ID, the TAI and the Emergency Area ID is set as shown in Fig. 9. Further, to the S1AP WRITE-REPLACE WARNING REQUEST transmitted from the MME 230 to the HeNB-GW 220, as shown in Fig. 8, the Warning Area List set to the SBc-AP WRITE-REPLACE WARNING REQUEST is set as it is.

Here, as in the third embodiment, it is assumed that the HeNB-GW 220 previously retains the distribution destination information in which the HeNB IDs and and the TAIs are associated with each other. Here, in the case where the Emergency Area ID is set to the Warning Area List, the HeNB-GW 220 cannot properly specify the HeNB to be the transfer destination.

Accordingly, in the fourth embodiment, the MME 230 further adds, in addition to the Warning Area List, the List of TAIs included in the SBc-AP WRITE-REPLACE WARNING REQUEST to the S1AP WRITE-REPLACE WARNING REQUEST.

That is, the switching center according to the fourth embodiment receives from an external source a distribution request which includes the location registration area identification information, in addition to the group identification information. Then, when the group identification information included in the received distribution request is not the location registration area identification information, the switching center includes the location registration area identification information in addition to the group identification information, and transmits the same as the distribution request to the gateway apparatus. Thereafter, the gateway apparatus specifies at least one radio base station associated with the location registration area identification information included in the distribution request, out of the distribution destination information.

Fig. 19 is a table showing an example of parameters of the S1AP WRITE-REPLACE WARNING REQUEST according to the fourth embodiment of the present invention. That is, in addition to the Warning Area List, the List of TAIs can be set. Thus, the HeNB-GW 220 can efficiently transmit an S1AP WRITE-REPLACE WARNING REQUEST message to the HeNBs.

Fig. 20 is a sequence diagram showing the flow of emergency early warning distribution by the WRITE-REPLACE WARNING REQUEST according to the fourth embodiment of the present invention. Here, similarly to Fig. 17, it is assumed that, following the process shown in Fig. 16, the HeNB-GW 220 already retains the distribution destination information in which the HeNB IDs and the TAIs are associated with each other.

Firstly, the CBC 240 transmits an SBc WRITE-REPLACE WARNING REQUEST to the MME 230 (S251). At this time, the CBC 240 sets the Emergency Area ID "3" to the Warning Area List and sets the TAI "Z" to the List of TAIs, and includes the same in the SBc WRITE-REPLACE WARNING REQUEST.

Next, the MME 230 extracts the List of TAIs from the SBc WRITE-REPLACE WARNING REQUEST received from the CBC 240, and specifies the destination HeNB-GW 220 based on the REQUEST (S252). Then, the MME 230 transmits an S1AP WRITE-REPLACE WARNING REQUEST to the specified HeNB-GW 220 (S253). At this time, the HeNB-GW 220 adds the extracted List of TAIs (TAI "Z") to the S1AP WRITE-REPLACE WARNING REQUEST. Note that, to the Warning Area List, the Emergency Area ID "3" has been set.

Subsequently, the call control unit 222 of the HeNB-GW 220 extracts the Emergency Area ID "3" from the Warning Area List of the received S1AP WRITE-REPLACE WARNING REQUEST. Also, the call control unit 222 extracts the List of TAIs (TAI "Z") of the received S1AP WRITE-REPLACE WARNING REQUEST. Then, the call control unit 222 specifies the HeNB ID associated with the TAI out of the distribution destination information (S254). Here, because of the TAI "Z", the HeNB 214 is specified in Fig. 5. Note that, since the HeNB 214 also corresponds to the Emergency Area ID "3", consequently a proper HeNB is specified.

Thereafter, the HeNB-GW 220 transmits the S1AP WRITE-REPLACE WARNING REQUEST only to the HeNB 214 (S255). Then, the HeNB 214 distributes an emergency early warning to each of the subordinate cells based on the received S1AP WRITE-REPLACE WARNING REQUEST (S256).

### <Other Embodiment of Invention>

In the foregoing second to fourth embodiments, the description has been given of the case where an emergency early warning is distributed from the CBC, that is, the case where a "WRITE-REPLACE WARNING REQUEST" is transmitted therefrom. Accordingly, in the following, a description will be given of the case where already continuing emergency early warning distribution is stopped.

Firstly, the CBC transmits information for cancelling (stopping) already continuing emergency early warning distribution. This information is, for example, a "STOP WARNING REQUEST" message (see 3GPP TS 29.168). Similarly to the "WRITE-REPLACE WARNING REQUEST", this message includes information for selecting an eNB or a HeNB-GW.

Next, the MME receives the information for cancelling (stopping) the already continuing emergency early warning distribution. Upon receipt, the MME selects an eNB or a HeNB-GW for transmission, using the List of TAIs included in the information. Thereafter, the MME transmits, to the HeNB-GW, the information for cancelling (stopping) the already continuing emergency early warning distribution. This information is, for example, a "KILL REQUEST" message (see 3GPP TS 36.413).

Subsequently, the call control unit of the HeNB-GW acquires, from the data management unit, information on a HeNB corresponding to the Emergency Area ID set to the Warning Area List.

Thereafter, the call control unit of the HeNB-GW selects a proper HeNB based on the information acquired from the data management unit. The HeNB-GW transmits, to the proper HeNB, the information for cancelling (stopping) the already continuing emergency early warning distribution (for example, the "KILL REQUEST" message).

In this manner, it becomes possible for the HeNB-GW to transmit, to only a proper HeNB, information for cancelling (stopping) already continuing emergency early warning distribution (for example, the "KILL REQUEST" message). Accordingly, similarly to the first to fourth embodiments, a distribution request will not be transferred to any radio base station not consequently required to perform distribution. Therefore, a delay in an emergency early warning distribution process can be prevented.

From the foregoing, the structures of the second to fourth embodiments can each be replaced by the structure of stopping already continuing emergency early warning distribution described above. That is, it is also possible to apply, to an existing mobile communication system, only the function of stopping distribution. Alternatively, it is also possible to add the function of stopping distribution to the structure of the second to fourth embodiments.

Note that, in the case where an Emergency Area ID covers a narrower range than a TAI, that is, in the case where the distribution area information is a group to which part of a plurality of radio base stations belonging to a location registration area belongs, the number of transfer destinations can be reduced as compared to the case where transfer is carried out based on the TAI, and hence the effect of the second embodiment becomes more pronounced.

Note that, the first to fourth embodiments of the present invention can be also applied to the CMAS (Commercial Mobile Alert System).

Further, the first to fourth embodiments of the present invention can be referred to as methods of realizing filtering ETWS messages by the HeNB-GW. It becomes possible to carry out filtering such that a WRITE-REPLACE WARNING REQUEST message is transmitted only to a proper HeNB.

Further, the present invention is not limited to the embodiments described above, and it goes without saying that various changes can be made within the scope not departing from the gist of the present invention which has been already described above. For example, in the embodiments described above, though the present invention has been described as hardware structures, the present invention is not limited thereto. In connection with the present invention, respective processes of the radio base station, the gateway apparatus, and the switching center can be realized by causing separate CPUs (Central Processing Units) to execute computer programs.

In such an example, the program can be stored using various types of non-transitory computer readable media (non-transitory computer readable media) and supplied to a computer. The non-transitory computer readable media include various types of tangible storage media (tangible storage media). Exemplary non-transitory computer readable media include magnetic recording media (for example, flexible disks, magnetic tapes, hard disk drives), magneto-optical recording media (for example, magneto-optical discs), CD-ROMs (Read Only Memories), CD-Rs, CD-R/Ws, DVDs (Digital Versatile Discs), BDs (Blu-ray (registered trademark) Discs), semiconductor memories (for example, mask ROMs, PROMs (Programmable ROMs), EPROMs (Erasable PROMs), flash ROMs, RAMs (Random Access Memories)). Further, the program may be supplied to a computer by various types of transitory computer readable media (transitory computer readable media). Exemplary transitory computer readable media include electric signals, optical signals, and electromagnetic waves. The transitory computer readable medium can supply such a program to a computer via wired communication path such as an electrical wire and an optical fiber, or via a wireless communication path.

Part of or all the foregoing embodiments can be described as in the following appendixes, but the present invention is not limited thereto.

### (Supplementary Note 1)

A mobile communication system comprising:
a plurality of radio base stations that each transmit a setting request including identification information of the radio base station itself and group identification information identifying a group to which the radio base station belongs;
a gateway apparatus that is connected to the plurality of radio base stations, the gateway apparatus associating, upon receipt of the setting request, the identification information and the group identification information included in the setting request with each other and storing as distribution destination information; and
a switching center that transmits, to the gateway apparatus, a distribution request including group identification information of a group being a target to distribute an emergency early warning, wherein
the gateway apparatus specifies, upon receipt of the distribution request, at least one of the radio base stations that is associated with the group identification information included in the distribution request out of the distribution destination information,
the gateway apparatus transfers the distribution request to the specified radio base station, and
the radio base station distributes, when the distribution request has been transferred from the gateway apparatus, the emergency early warning to a subordinate cell.

### (Supplementary Note 2)

The mobile communication system according to Supplementary Note 1, wherein the setting request is at least one of a request for the radio base station to set a connection with the gateway apparatus and a request for updating the distribution destination information.

### (Supplementary Note 3)

The mobile communication system according to Supplementary Note 1 or 2, wherein
the radio base stations each have distribution area information identifying an area to which the emergency early warning is distributed,
the radio base stations each transmit, to the gateway apparatus, the setting request including the distribution area information as the group identification information, and
the gateway apparatus specifies, when the group identification information included in the distribution request is the distribution area information, at least one of the radio base stations that is associated with the distribution area information included in the distribution request out of the distribution destination information.

### (Supplementary Note 4)

The mobile communication system according to any one of Supplementary Notes 1 to 3, wherein the group is a group to which part of the plurality of radio base stations belonging to a location registration area belongs.

### (Supplementary Note 5)

The mobile communication system according to Supplementary Note 1 or 2, wherein
the radio base stations each transmit, to the gateway apparatus, the setting request including identification information of a location registration area to which the radio base station belongs as the group identification information, and
the gateway apparatus specifies, when the group identification information included in the distribution request is the identification information of the location registration area, at least one of the radio base stations that is associated with the identification information of the location registration area included in the distribution request out of the distribution destination information.

### (Supplementary Note 6)

The mobile communication system according to Supplementary Note 5, wherein
the switching center externally receives the distribution request including the identification information of the location registration area in addition to the group identification information,
when the group identification information included in the received distribution request is not the identification information of the location registration area, the switching center transmits, to the gateway apparatus, the distribution request including the identification information of the location registration area in addition to the group identification information, and
the gateway apparatus specifies at least one of the radio base stations that is associated with the identification information of the location registration area included in the distribution request out of the distribution destination information.

### (Supplementary Note 7)

The mobile communication system according to any one of Supplementary Notes 1 to 6, wherein the mobile communication system is of an LTE (Long Term Evolution) scheme.

### (Supplementary Note 8)

A mobile communication method comprising:
transmitting, by each of a plurality of radio base stations connected to a gateway apparatus, a setting request including identification information of the radio base station itself and group identification information identifying a group to which the radio base station belongs to the gateway apparatus;
associating, by the gateway apparatus, upon receipt of the setting request, the identification information and the group identification information included in the setting request with each other, and storing as distribution destination information;
transmitting, by a switching center, to the gateway apparatus, a distribution request including group identification information of a group being a target to distribute an emergency early warning;
specifying, by the gateway apparatus, upon receipt of the distribution request, at least one of the radio base stations that is associated with the group identification information included in the distribution request out of the distribution destination information, and transferring the distribution request to the specified radio base station; and
distributing, by the radio base station, the emergency early warning to a subordinate cell when the distribution request has been transferred from the gateway apparatus.

### (Supplementary Note 9)

A gateway apparatus that is connected to a plurality of radio base stations, the gateway apparatus comprising:
receiving means for receiving, from each of the plurality of radio base stations, a setting request including identification information of the radio base station itself and group identification information identifying a group to which the radio base station belongs;
storing means for associating, upon receipt of the setting request, the identification information and the group identification information included in the setting request with each other and storing as distribution destination information; and
transferring means for specifying, upon receipt of the distribution request including the group identification information of a group being a target to distribute an emergency early warning from a switching center, at least one of the radio base stations that is associated with the group identification information included in the distribution request out of the distribution destination information, and transferring the distribution request to the specified radio base station.

### (Supplementary Note 10)

A radio base station that is connected to a gateway apparatus, the radio base station comprising:
transmitting means for transmitting, to the gateway apparatus, a setting request including identification information of the radio base station itself and group identification information identifying a group to which the radio base station belongs, so as to cause the gateway apparatus to associate the identification information and the group identification information with each other and to store as distribution destination information; and
distributing means for distributing an emergency early warning to a subordinate cell, in response to the gateway apparatus: receiving a distribution request including group identification information of a group being a target to distribute the emergency early warning from a switching center; specifying the identification information of the radio base station itself associated with the group identification information included in the distribution request out of the distribution destination information; and transferring the distribution request.

### (Supplementary Note 11)

A non-transitory computer readable medium that stores a control program for controlling a gateway apparatus connected to a plurality of radio base stations, the control program causing the radio base station to execute:
a receiving process of receiving, from each of the plurality of radio base stations, a setting request including identification information of the radio base station itself and group identification information identifying a group to which the radio base station belongs;
a storing process of associating, upon receipt of the setting request, the identification information and the group identification information included in the setting request with each other and storing as distribution destination information; and
a transferring process of specifying, upon receipt of the distribution request including the group identification information of a group being a target to distribute an emergency early warning from a switching center, at least one of the radio base stations that is associated with the group identification information included in the distribution request out of the distribution destination information, and transferring the distribution request to the specified radio base station.

### (Supplementary Note 12)

A non-transitory computer readable medium that stores a control program for controlling a radio base station connected to a gateway apparatus, the control program causing the radio base station to execute:
a transmission process of transmitting, to the gateway apparatus, a setting request including identification information of the radio base station itself and group identification information identifying a group to which the gateway apparatus belongs, so as to cause the gateway apparatus to associate the identification information and the group identification information with each other and to store as distribution destination information; and
a distribution process of distributing an emergency early warning to a subordinate cell, in response to the gateway apparatus: receiving a distribution request including group identification information of a group being a target to distribute the emergency early warning from a switching center; specifying the identification information of the radio base station itself associated with the group identification information included in the distribution request out of the distribution destination information; and transferring the distribution request.

In the foregoing, though the present invention has been described with reference to the embodiments, the present invention is not limited thereby. The structure and details of the present invention can be changed in various manners that can be understood by a person skilled in the art within the scope of the invention.

The present application claims priority to Japanese Patent Application No. 2012-180765 filed on August 17, 2012, the disclosure of which is incorporated by reference herein in its entirety.

### Reference Signs List

- 100: mobile communication system
- 111: radio base station
- 112: radio base station
- 11n: radio base station
- 120: gateway apparatus
- 121: distribution destination information
- 122: receiver unit
- 123: memory unit
- 124: transfer unit
- 125: radio base station identification information
- 126: group identification information
- 130: switching center
- 200: mobile communication system
- 211: HeNB
- 212: HeNB
- 213: HeNB
- 214: HeNB
- 220: HeNB-GW
- 221: distribution destination information
- 222: call control unit
- 223: data management unit
- 224: Emergency Area ID
- 225: HeNB ID
- 230: MME
- 240: CBC
- 251: Emergency Area ID
- 252: Emergency Area ID
- 253: Emergency Area ID
- 254: Emergency Area ID
- 261: HeNB ID
- 1111: transmitter unit
- 1112: distributor unit
- 2111: transmitter unit
- 2112: receiver unit
- 2113: distributor unit
- 2114: memory unit

## Claims

1. A mobile communication system comprising:
a plurality of radio base stations that each transmit a setting request including identification information of the radio base station itself and group identification information identifying a group to which the radio base station belongs;
a gateway apparatus that is connected to the plurality of radio base stations, the gateway apparatus associating, upon receipt of the setting request, the identification information and the group identification information included in the setting request with each other and storing as distribution destination information; and
a switching center that transmits, to the gateway apparatus, a distribution request including group identification information of a group being a target to distribute an emergency early warning, wherein
the gateway apparatus specifies, upon receipt of the distribution request, at least one of the radio base stations that is associated with the group identification information included in the distribution request out of the distribution destination information,
the gateway apparatus transfers the distribution request to the specified radio base station, and
the radio base station distributes, when the distribution request has been transferred from the gateway apparatus, the emergency early warning to a subordinate cell.

2. The mobile communication system according to Claim 1, wherein the setting request is at least one of a request for the radio base station to set a connection with the gateway apparatus and a request for updating the distribution destination information.

3. The mobile communication system according to Claim 1 or 2, wherein
the radio base stations each have distribution area information identifying an area to which the emergency early warning is distributed,
the radio base stations each transmit, to the gateway apparatus, the setting request including the distribution area information as the group identification information, and
the gateway apparatus specifies, when the group identification information included in the distribution request is the distribution area information, at least one of the radio base stations that is associated with the distribution area information included in the distribution request out of the distribution destination information.

4. The mobile communication system according to any one of Claims 1 to 3, wherein the group is a group to which part of the plurality of radio base stations belonging to a location registration area belongs.

5. The mobile communication system according to Claim 1 or 2, wherein
the radio base stations each transmit, to the gateway apparatus, the setting request including identification information of a location registration area to which the radio base station belongs as the group identification information, and
the gateway apparatus specifies, when the group identification information included in the distribution request is the identification information of the location registration area, at least one of the radio base stations that is associated with the identification information of the location registration area included in the distribution request out of the distribution destination information.

6. The mobile communication system according to Claim 5, wherein
the switching center externally receives the distribution request including the identification information of the location registration area in addition to the group identification information,
when the group identification information included in the received distribution request is not the identification information of the location registration area, the switching center transmits, to the gateway apparatus, the distribution request including the identification information of the location registration area in addition to the group identification information, and
the gateway apparatus specifies at least one of the radio base stations that is associated with the identification information of the location registration area included in the distribution request out of the distribution destination information.

7. The mobile communication system according to any one of Claims 1 to 6, wherein the mobile communication system is of an LTE (Long Term Evolution) scheme.

8. A mobile communication method comprising:
transmitting, by each of a plurality of radio base stations connected to a gateway apparatus, a setting request including identification information of the radio base station itself and group identification information identifying a group to which the radio base station belongs to the gateway apparatus;
associating, by the gateway apparatus, upon receipt of the setting request, the identification information and the group identification information included in the setting request with each other, and storing as distribution destination information;
transmitting, by a switching center, to the gateway apparatus, a distribution request including group identification information of a group being a target to distribute an emergency early warning;
specifying, by the gateway apparatus, upon receipt of the distribution request, at least one of the radio base stations that is associated with the group identification information included in the distribution request out of the distribution destination information, and transferring the distribution request to the specified radio base station; and
distributing, by the radio base station, the emergency early warning to a subordinate cell when the distribution request has been transferred from the gateway apparatus.

9. A gateway apparatus that is connected to a plurality of radio base stations, the gateway apparatus comprising:
receiving means for receiving, from each of the plurality of radio base stations, a setting request including identification information of the radio base station itself and group identification information identifying a group to which the radio base station belongs;
storing means for associating, upon receipt of the setting request, the identification information and the group identification information included in the setting request with each other and storing as distribution destination information; and
transferring means for specifying, upon receipt of the distribution request including the group identification information of a group being a target to distribute an emergency early warning from a switching center, at least one of the radio base stations that is associated with the group identification information included in the distribution request out of the distribution destination information, and transferring the distribution request to the specified radio base station.

10. A radio base station that is connected to a gateway apparatus, the radio base station comprising:
transmitting means for transmitting, to the gateway apparatus, a setting request including identification information of the radio base station itself and group identification information identifying a group to which the radio base station belongs, so as to cause the gateway apparatus to associate the identification information and the group identification information with each other and to store as distribution destination information; and
distributing means for distributing an emergency early warning to a subordinate cell, in response to the gateway apparatus: receiving a distribution request including group identification information of a group being a target to distribute the emergency early warning from a switching center; specifying the identification information of the radio base station itself associated with the group identification information included in the distribution request out of the distribution destination information; and transferring the distribution request.
